Europäisches Patentamt

European Patent Office

Office européen des brevets

(11) Publication number: **0 307 994 B1**

## EUROPEAN PATENT SPECIFICATION

(45) Date of publication of patent specification: **29.04.92** (51) Int. Cl.5: **G06K 15/12**

(21) Application number: **88201875.7**

(22) Date of filing: **02.09.88**

---

(54) An exposure device with an aging correction system for a LED printer.

---

(30) Priority: **11.09.87 NL 8702166**

(43) Date of publication of application:
**22.03.89 Bulletin 89/12**

(45) Publication of the grant of the patent:
**29.04.92 Bulletin 92/18**

(84) Designated Contracting States:
**DE FR GB IT NL**

(56) References cited:
**WO-A-87/02162**
**GB-A- 2 104 266**
**US-A- 4 588 883**

(73) Proprietor: **Océ-Nederland B.V.**
**St. Urbanusweg 43**
**NL-5914 CC Venlo(NL)**

(72) Inventor: **Reinten, Hans**
**Bernhardstraat 14**
**NL-5941 GL Velden(NL)**

(74) Representative: **Hanneman, Henri W.A.M. et al**
**Océ-Nederland B.V. Patents and Information**
**Postbus 101**
**NL-5900 MA Venlo(NL)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

Rank Xerox (UK) Business Services
(-/2.18/2.0)

## Description

This invention relates to an exposure device for the linewise and imagewise exposure of a photosensitive layer, comprising:

- an array of LED's (24 to 27)
- a control device (42) adapted to energize each LED individually for a variable time per image line by means of an absolute correction number,
- a memory system (10) in which there is stored for each LED in a correction table the absolute correction number which is related to the energization time required in order that the absolute quantity of light of each LED on the photosensitive layer may be made equal per image line and in which is stored the measured relative light intensity of each LED in a first table,
- at least one light-sensor (41) disposed near the array of LED's and at a fixed location with respect thereto, and with which the relative light intensiy of each individual LED can be measured.

An exposure device of this kind is known from US-patent No. 4,588,883. The light intensity of the LED's is measured by means of a detector fabricated in the substrate of the LED-array which detects detects subsurface light from any forward biased LED of such array. The intensity of the light output of each of the LED's is dynamically corrected by comparing the output signal of the detector with a value stored in a memory. In this way the detector measures the absolute light intensity of each LED.

A disadvantage of this exposure device is that it is difficult to ensure equality due to the considerable length of the detector. Local soiling causes considerable inequalities. Also, each LED is contained in a control circuit, the current through the LED being adjusted so that the absolute light intensity of the LED remains constant.

Controlling the current through an LED in order that the light intensity may remain constant has the disadvantage that particularly at high switching speeds the switching-on time for the LED varies so that the individual image points per image line are not imaged on one and the same line.

From UK-patent application 2,104,266 an exposure device is known wherein the absolute light intensity of each LED on the photosensitive layer is determined and an absolute correction number is derived from this and is then stored in a memory. The absolute correction number is used to energize each individual LED per image line for a time which is inversely proportional to the light intensity of said LED. In this way the LED's are energized with pulse time modulation and each LED delivers the same amount of light to the photosensitive layer per image point.

When a LED is used aging occurs, the emitted quantity of light decreasing as a function of the period of use. This aging will not be equal for all the LED's because the period of use of each individual LED depends on the information content of the images under formation and also because LED's which emit less light per image line have to be energized longer then the LED's which emit more light. Thus after a number of hours of use the absolute correction number will have to be adapted. In the device described in UK 2,104,266, accordingly, the absolute light intensity on the photosensitive layer continually has to be re-determined. This means that a service engineer is required to carry out an absolute light measurement of each LED on the photosensitive layer at specific intervals, or that he will have to remove the array of LED's from the printer and then determine the absolute correction numbers in a test rig.

The object of the invention is to obviate the disadvantages of the known devices. According to the invention, this object is attained in an exposure device according to the preamble, in that the at least one light sensor (41) is smaller than the array of LED's, in that a volatile memory (44) is provided with an aging table in which the light intensity of each individual LED measured by the light-sensor (41) is stored and periodically updated during the lifetime of the array of LED's, and in that on the basis of the data momentarily stored in the aging table and the corresponding data in the first table the control device (42) determines a new absolute correction number for each LED with which each LED is energized individually for a variable time per image line.

Consequently, in the event of aging, the new correction numbers by means of which the light out put of each LED is kept equal over its lifetime are automatically determined for the individual LED's.

The invention will be explained hereinafter with reference to a number of drawings in which:

Fig. 1 is a diagram showing a control device in an exposure device according to the invention, and

Fig. 2 is a top plan view of a straight array of LED's on a substrate.

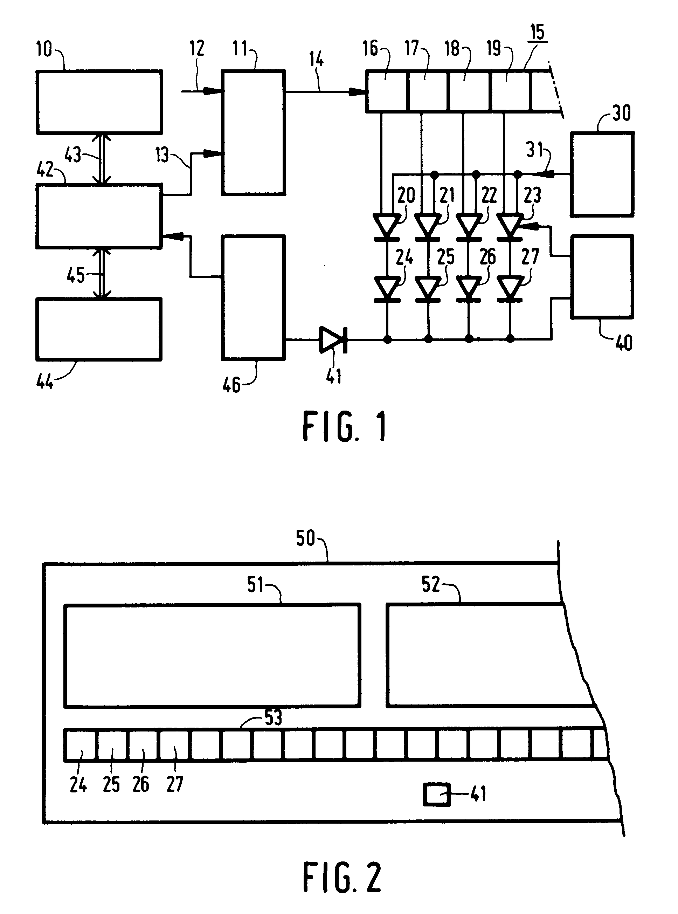

Fig. 1 illustrates part of a straight array of LED's comprising the individual LED's 24 to 27. An array of LED's of this kind is generally constructed from a large number of individual LED's at a density of about 20 LED's per mm. If an array of LED's of this kind is used as an exposure source for an electrophotographic printer, an array must contain some 6 000 LED's. The array is disposed at a short distance from the photoconductive layer. Between the array and the photoconductive layer there is disposed an array of imaging glass fibres which can form an image of each LED on the photoconductor. In a memory 10 there is stored in a correction table for each LED 24 to 27 a four-bit absolute number which is related to the energization time required to make the absolute quantity of light on the photosensitive layer equal per image line. The absolute correction number is related to the absolute light intensity of an LED. When the array of LED's is manufactured, this correction table is compiled in a test rig and stored in the memory 10. Control device 42 is connected to the memory 10 via a bus system 43. The control device 42 can call up the four-bit absolute correction numbers from the memory and feed them serially to combination circuit 11 via bus 13. This combination circuit 11 comprises a D/A converter in which a four-bit correction number is converted to a corresponding d.c. voltage. Via line 12 an image signal is also fed to combination circuit 11 and this image signal is multiplied by the said d.c. voltage. If the image signal is logic 1 then the d.c. signal is fed via line 14 to an analog shift register 15. If the image signal is logic 0, then no signal is available over line 14. The memory 10 is addressed by the control device 42 in synchronism with the image signal supplied. The analog shift register 15 of the series-in parallel-out type is thus filled with the data concerning a complete image-line. Each parallel output of the shift register 15 is conneceted to an input of one of the comparator circuits 20 to 23. Thus the output of place 16 of shift register 15 is connected to an input of comparator circuit 20, place 17 of shift register 15 to an input of comparator circuit 21, and so on.

The outputs of the comparator circuits 20 to 23 are each connected to an LED 24 to 27. For each image line to be imaged the signal generator 30 delivers a trapezoidal pulse as described in detail in Netherlands Patent Application 8403926. If the value of the output signal of place 16 of shift register 15 is greater than the instantaneous value of the pulse of the signal generator 30, the output of the comparator circuit 20 will become "high" and LED 24 will be energized. When the instantaneous value of the pulse of signal generator 30 becomes greater than the value of the output signal 16 of the shift register 15, the output of the comparator circuit 20 will become "low" and LED 24 will cut off. Similarly, the other LED's 25 to 27 will be energized for a specific time per image line. An adjustable current source 40 is also connected to all the comparator circuits, by means of which all the LED's are subjected to an identical current on energization.

Near the array of LED's there is disposed a photodiode 41 with which the relative light intensity of each LED can be measured. The measured relative light intensity signals are fed via an A/D converter 46 to the control device 42 and are stored in a first table of memory 10. This first table is also disposed in the memory during the manufacture of the array of LED's. A volatile memory 44 is also connected the control device 42 via bus 45.

When the printer is started up, the relative light intensity of each LED is measured by means of photodiode 41 and stored in an aging table in the volatile memory 44 by the A/D converter 46 and control device 42.

During printing of an image, the contents of the first memory location in the first table of memory 10 are subjected, by the control device 42, to division by the contents of the first memory location of the aging table in volatile memory 44. The quotient obtained is multiplied by the corresponding four-bit absolute correction number in the control device 42. The resulting new absolute correction number is fed via bus 13 to combination circuit 11. In this way, new absolute correction numbers are derived serially for all the LED's 20 to 23 and are used in the image-forming operation.

The new absolute correction numbers need not be re-calculated for each image line. Once the numbers have been determined they can be placed in a new table in the volatile memory 44 and then be used in the further image-forming operation.

Fig. 2. shows a straight partial array of LED's 53 disposed on a substrate 50. Some of the circuits described with reference to Fig. 1 are accomodated in IC's 51,52. A photodiode 41 is also disposed on the substrate 50.

An array of LED's for a printer is generally assembled from a number of individual partial arrays each disposed on a substrate. The partial arrays are aligned and disposed on a support. In the exposure device described, each partial array of LED's is provided with a light-sensor 41 so that a number of light-sensors occurs over the entire array. Each light-sensor is used to measure the relative light intensity of a partial array.

The absolute correction numbers determined during manufacture related to the relative light intensity measured for each LED are stored in a first table in a non-volatile memory (EPROM). This non-volatile memory can also be disposed on the support 50 and may form part of the memory 10 described with respect to Fig. 1.

The exposure device according to the invention can also be provided with just one light-sensor disposed outside the support. The relative light intensity of each LED can then be determined with this sensor. The new absolute correction number as determined can also be used for service diagnosis. The control device 42 is for this purpose provided with a comparator circuit in which the new absolute correction number is each time compared with the predetermined value. This predetermined value corresponds to a one hundred percent duty cycle, or continuous "on" if a number of image points have to be printed successively.

If the value of the new absolute correction number becomes greater than the predetermined value, the control device delivers a warning signal. The printer operator can in this way see that the array of LED's is practically due for replacement and pass this to the service organization.

In order to measure the aging and/or changes in the system, an extra LED can be disposed on the support, this extra LED not being used for image formation. This LED is only used as a reference light source in order periodically to test the decline or soiling of the light sensor.

The invention is not restricted to the embodiment of the exposure device described. Ths the entire circuit can be made completely digital and the skilled addressee will be able to make numerous variations all of which, however, will fall within the scope of the following claims.

## Claims

1. An exposure device for the linewise and imagewise exposure of a photosensitive layer, comprising:
   - an array of LED's (24 to 27)
   - a control device (42) adapted to energize each LED individually by means of an absolute correction number,
   - a memory system (10) in which there is stored for each LED in a correction table the absolute correction number which is related to the energization time required in order that the absolute quantity of light of each LED on the photosensitive layer may be made equal per image line, and in which is stored the measured relative light intensity of each LED in a first table,
   - at least one light-sensor (41) disposed near the array of LED's and at a fixed location with respect thereto, and with which the relative light intensity of each individual LED can be measured, characterised in that the at least one light sensor (41) is smaller than the array of LED's, in that a volatile memory (44) is provided with an aging table in which the light intensity of each individual LED measured by the light-sensor (41) is stored and periodically updated during the lifetime of the array of LED's, and in that on the basis of the data momentarily stored in the aging table and the corresponding data in the first table the control device (42) determines a new absolute correction number for each LED with which each LED is energized individually for a variable time per image line.

2. An exposure device according to claim 1, in which the array of LED's is assembled from a number of individual partial arrays which are disposed on a support (50) together with a number of control circuits (51, 52), characterised in that the light-sensor(s) (41) is/are disposed on the support (50).

3. An exposure device according to claim 1 or 2, characterised in that the control device (42) delivers a warning signal when a new absolute correction number exceeds a predetermined value.

4. An exposure device according to claim 2, characterised in that the control circuits (51, 52) comprise said volatile memory (44) in which the aging table can be stored.

## Revendications

1. Dispositif d'exposition pour l'exposition par lignes et par images d'une couche photosensible comprenant :
   - un réseau de DEL (24 à 27) ;
   - un dispositif de commande (42) adapté pour activer chaque DEL individuellement au moyen d'un nombre de correction absolu ;
   - un système à mémoire (10) dans lequel on a stocké pour chaque DEL dans une table de correction le nombre de correction absolu qui, est en rapport avec le temps d'activation nécessaire pour que la quantité absolue de lumière de chaque DEL sur la couche photosensible puisse être égale par ligne d'image, et dans lequel est stockée l'intensité de lumière relative mesurée de chaque DEL dans une première table ;
   - au moins un capteur de lumière (41) disposé près du réseau de DEL et à un emplacement fixe par rapport à celui-ci, et avec lequel l'intensité de lumière relative de chaque DEL individuelle peut être mesurée, caractérisé en ce que ledit au moins un capteur de lumière (41) est plus petit que le réseau de DEL, en ce qu'une mémoire volatile (44) est pourvue d'une table de vieillissement dans laquelle l'intensité de la lumière de chaque DEL individuelle mesurée par le capteur de lumière (41) est stockée et mise à jour périodiquement pendant la durée de vie du réseau de DEL, et en ce que sur la base des données momentanément stockées dans la table de vieillissement et des données correspondantes dans la première table, le dispositif de commande (42) détermine un nouveau nombre de correction absolu pour chaque DEL avec lequel chaque DEL est activée individuellement pendant un temps variable par ligne d'image.

2. Dispositif d'exposition selon la revendication 1, dans lequel le réseau de DEL est assemblé à partir d'un certain nombre de réseaux partiels individuels qui sont disposés sur un support (50) ensemble avec un certain nombre de circuits de commande (51, 52), caractérisé en ce que le ou les capteur(s) de lumière (41) est/sont disposé(s) sur le support (50).

3. Dispositif d'exposition selon les revendications 1 ou 2, caractérisé en ce que le dispositif de commande (42) délivre un signal d'avertissement quand un nouveau nombre de correction absolu excède une valeur prédéterminée.

4. Dispositif d'exposition selon la revendication 2, caractérisé en ce que les circuits de commande (51, 52) comprennent ladite mémoire volatile (44) dans laquelle la table de vieillissement peut être stockée.

**Patentansprüche**

1. Belichtungseinrichtung zur zeilenweisen und bildmäßigen Belichtung einer photoempfindlichen Schicht, mit:
   - einem Feld von LEDs (24 bis 27)
   - einer Steuereinrichtung (42), die dazu eingerichtet ist, jede einzeine LED anhand einer absoluten Korrekturzahl zu erregen,
   - einem Speichersystem (10), in welchem für jede LED in einer Korrekturtabelle die absolute Kortekturzahl gespeichert ist, die der Ertegungszeit zugeordent ist, die benötigt wird, damit die absolute Lichtmenge von jeder LED auf der photoempfindlichen Schicht pro Bildzeile gleich gemacht werden kann, und in dem die gemessene relative Lichtintensität jeder LED in einer ersten Tabelle gespeichert ist,

   - wenigstens einem Lichtsensor (41), der in der Nähe des Feldes der LEDs und in einer festen Position relativ zu diesem Feld angeordnet ist und mit dem die relative Lichtintensität jeder einzelnen LED gemessen werden kann, dadurch **gekennzeichnet,** daß der wenigstens eine Lichtsensor (41) kleiner ist als das Feld der LEDs, daß ein flüchtiger Speicher (44) mit einer Alterungstabelle versehen ist, in der die durch den Lichtsensor (41) gemessene Lichtintensität jeder einzelnen LED gespeichert und während der Lebensdauer des Feldes der Leuchtdioden periodisch aktualisiert wird, und daß die Steuereinrichtung (42) anhand der momentan in der Alterungstabelle gespeicherten Daten und anhand der entsprechenden Daten in der ersten Tabelle eine neue absolute Kortekturzahl für jede LED bestimmt, gemäß der jede LED einzeln für eine variable Zeitdauer pro Bildzeile erregt wird.

2. Belichtungseinrichtung nach Anspruch 1, bei der das Feld der LEDs aus einer Anzahl einzelner Teilfelder zusammengesetzt ist, die zusammen mit einer Anzahl von Steuerschaltungen (51, 52) auf einem Träger (50) angeordnet sind, dadurch **gekennzeichnet,** daß der Lichtsensor (41) (die Lichtsensoren) auf dem Träger (50) angeordnet ist (sind).

3. Belichtungseinrichtung nach Anspruch 1 oder 2, dadurch **gekennzeichnet,** daß die Steuereinrichtung (42) ein Warnsignal abgibt, wenn eine neue absolute Korrekturzahl einen vorgegebenen Wert übersteigt.

4. Belichtungseinrichtung nach Anspruch 2, dadurch **gekennzeichnet,** daß die Steuerschaltungen (51, 52) den flüchtigen Speicher (44) enthalten, in dem die Alterungstabelle gespeichert werden kann.

FIG. 1

FIG. 2